Europäisches Patentamt

European Patent Office

Office européen des brevets

(19)

(11) Publication number: **0 266 517 B1**

# EUROPEAN PATENT SPECIFICATION

(12)

(45) Date of publication of patent specification: **31.07.91**

(51) Int. Cl.⁵: **B01J 4/00**, //D06B23/20, D06P1/673

(21) Application number: **87113170.2**

(22) Date of filing: **09.09.87**

---

(54) **Device for feeding solids into liquids in a controlled manner.**

---

(30) Priority: **04.11.86 IT 2358086 U**

(43) Date of publication of application:
**11.05.88 Bulletin 88/19**

(45) Publication of the grant of the patent:
**31.07.91 Bulletin 91/31**

(84) Designated Contracting States:
**AT BE CH DE ES FR GB GR IT LI LU NL SE**

(56) References cited:
**AT-A- 361 864**
**DE-C- 3 538 644**
**US-A- 3 807 700**

(73) Proprietor: **CERESIO Srl**
**Via N. Bixio 7**
**I-20050 Legnano (MI)(IT)**

(72) Inventor: **Galliverti, Marco**
**Piazza Europa 12**
**Legnano(IT)**

(74) Representative: **Gervasi, Gemma, Dr.**
**NOTARBARTOLO & GERVASI Srl 33, Viale**
**Bianca Maria**
**I-20122 Milano(IT)**

EP 0 266 517 B1

## Description

This invention relates to a device for feeding solids into circulating liquids in a controlled manner.

More particularly, the invention relates to a device which by means of a rotary valve enables a solid in granular or powder form to be continuously fed in a metered manner into a circulating liquid, in which it becomes dissolved or suspended

The device according to the invention has special applicational characteristics and particular advantages compared with the means used in the known art for the same purpose. In particular, said device prevents solid particle agglomeration which occurs when operating in accordance with the known art and which leads to feed interruption with consequent operational discontinuity.

The device according to the present invention is suitable for feeding any type of soluble or insoluble solid into any type of liquid to obtain the relative solution or suspension, and is therefore useful in numerous types of industry, such as the chemical, textile, dyeing, paper, food, confectionary and other industries.

For example it can be used for feeding sodium chloride, sodium sulphate, sodium dithionite, sugar, pigments, polymers etc. into aqueous or non-aqueous liquids. It is particularly useful for feeding solids which tend to consolidate in the presence of small quantities of liquids or of vapours released from these liquids and which condense on the solid, or of droplets conveyed by such vapours into contact with the solid.

Said device is particularly useful in the dyeing industry when used for feeding sodium chloride into the dye bath.

In the dyeing industry, considerable quantities of sodium chloride are added to the dye bath containing the dyes and various auxiliaries such as surface active agents, dispersing agents etc., in order to regulate the consumption of the dye and control its migration into the textile fibres.

One method used for adding the sodium chloride is to prepare separately, in a suitable dissolving apparatus, a saturated solution of sodium chloride which is then fed directly to the dyeing machine.

This method has the following drawbacks:

- the operations are complicated because of the large volumes concerned, the volume of sodium chloride solution being about 1/3 of the volume of the bath to which it is added;
- because of this volume ratio, this operation leads to considerable variation in the so-called "bath ratio", this being the weight ratio of fabric to the dye bath, and this results in non-constant dye deposition conditions;

- the plant is rather costly.

A second method used is to feed solid sodium chloride into the dye bath by a device consisting of a first conveying screw which withdraws the salt from a hopper and transfers it to a second hopper, from this hopper the salt being withdrawn by a second conveying screw which feeds it by gravity to a dissolving apparatus through which a portion of the dye bath circulates.

This method overcomes certain problems of the first method in that for examples it avoids the need to previously dissolve the salt, however it also has drawbacks such as the following:

- because of the presence of moisture or splashed water droplets which agglomerate and consolidate the salt, the second screw tends to clog, this compromising the feed uniformity;
- the apparatus is rather costly and the operations are complicated.

We have now found that all the drawbacks of the known art are obviated by the device of the present invention, by means of which salt agglomeration and consolidation are prevented, so that the salt metering operations become very simple and have maximum reliability. Moreover, because of its simplicity, said device is of very low constructional cost.

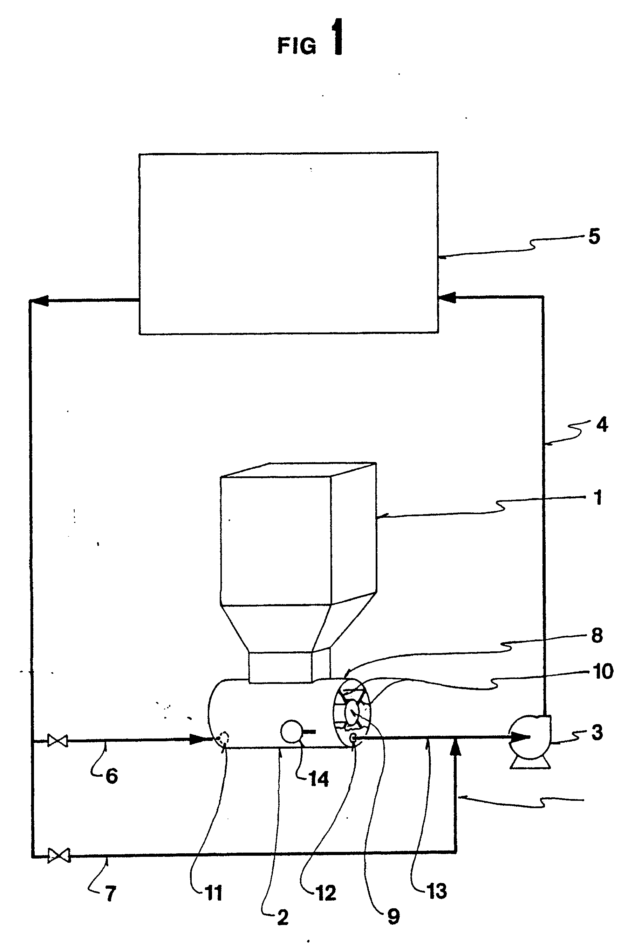

The device according to the invention comprises a rotary valve with a horizontal shaft which feeds the solid directly into contact with the circulating liquid, which is circulated at a high-ratio of liquid throughput to fed solid, the level of said circulating liquid being kept below the shaft of said valve. These and further characteristics and advantages of the device according to the invention will be more apparent from the description given hereinafter and from the accompanying Figure 1, which relate to a preferred embodiment of the invention and are given by way of non-limiting illustration.

Figure 1 shows an embodiment of the device according to the invention connected into an operating circuit of a fabric dyeing plant.

With reference to the numerals of Figure 1, said device consists essentially of a hopper 1 into which the sodium chloride is loaded, a rotary valve 2 which transfers the salt from the hopper 1 to the lower part of the rotary valve body, a pump 3 and a line 4 for recycling the dye bath.

Said bath is fed to the dyeing machine 5 and is then suitably divided between the lines 6 and 7 in order to regulate the throughput through the valve in accordance with the amount required for the sodium chloride feed.

Said rotary valve 2 consists of an outer cylindrical body 8 and an inner impeller 9 and 10, and is fitted with a drive system consisting of a direct current motor or a variable speed motor (not shown).

Said cylindrical body consists of a flanged cylinder positioned horizontally and provided in its upper part with a slot through which the salt passes from the hopper 1 to the upper sector of the rotary valve. In the flanges which close the cylinder laterally, there are provided two ports 11 and 12 for the threaded or flanged connection to the lines 6 and 13 respectively.

Said impeller consists of a cylindrical shaft 9 mounted on suitable bearings or bushes, and to which two or more blades 10 are welded or otherwise fixed.

Said ports 11 and 12 are provided at a lower level than said shaft 9.

Said blades 10 do not form a seal against said cylinder 8, so as to facilitate the intake of liquid by the pump and thus maintain the liquid level within the required range.

Said rotary valve is fitted with a liquid level controller 14.

For feeding the solid into the circulating liquid in a controlled manner, the solid is loaded into the hopper 1 and the liquid is circulated by the pump 3, the throughput being suitably divided between the lines 6 and 7.

The throughput ratio of liquid to solid varies according to their characteristics, and in practice lies between 35 l of liquid per kg of solid and 20,000 l of liquid per kg of solid.

The upper limit can clearly be increased at will, however in normal industrial operations the aforesaid limit is not exceeded.

The level of the liquid flowing through the rotary valve 2 is kept constantly lower than the valve shaft 9 by the level controller 14.

The described device allows operation within a wide range of solid throughputs, ranging from a few kg/h to some tons/h. In particular, in the dyeing industry the device is used for sodium chloride throughputs ranging from 45 to 450 kg/h, with liquid throughputs through the valve ranging from 1 to 10 m³/h.

From the aforegoing description it is apparent that the invention attains the proposed objects, and that in particular the invention enables a solid to be fed continuously into a circulating liquid with maximum operational reliability by means of a simple and economical device.

## Claims

1. A device for feeding solids into liquids in a controlled manner, wherein a rotary valve (2) with a horizontal shaft (9) feeds the solid directly into contact with the circulating liquid, which is circulated at a high ratio of liquid throughput to fed solid, the level of said circulating liquid being kept below the shaft of said valve.

2. A device as claimed in claim 1, characterised in that said circulating liquid enters the cylindrical body (8) of said rotary valve (2) through a port (11) and leaves through a port (12), said ports being provided in the lateral closure flanges of said cylindrical body at a level below said horizontal shaft (9).

3. A device as claimed in claims 1 and 2, characterised in that two or more blades (10) are welded or otherwise fixed to said horizontal shaft (9), they not forming a seal against said cylindrical body (8) in order to facilitate liquid offtake and thus maintain the liquid level constantly below the shaft (9).

4. A device as claimed in claim 1, characterised in that said rotary valve (2) is fitted with a liquid level controller (14).

5. A device as claimed in claim 1, characterised in that said ratio of liquid throughput to fed solid is adjustable between 35 l and 20,000 l of liquid per kg of solid.

## Revendications

1. Dispositif d'alimentation d'une façon régulée de solides dans des liquids où une soupape rotative (2) avec un arbre horizontal alimente le solide directement en contact avec le liquide circulant qui est circulé avec un haut rapport de liquide contre solide alimenté et où le niveau du liquide circulant est maintenu au-dessous de l'arbre de la soupape.

2. Dispositif selon la revendication 1, où le liquide circulant entre dans le corps cylindrique (8) de la soupape rotative (2) par un orifice (11) et ressort par un orifice (12), les orifices étant prévues dans les brides latérales de clôture du corps cylindrique au-dessous de l'arbre horizontal (9).

3. Dispositif selon les revendications 1 et 2, où deux ou plusieurs pales (10) sont soudées ou fixées d'une autre façon à l'arbre horizontal (9) sans former un sceau contre le corps cylindrique (8) de manière à faciliter la sortie du liquide et maintenir le niveau du liquide constamment au-dessous de l'arbre 6 (9).

4. Dispositif selon la revendication 1, où la soupape rotative (2) est equipée avec un contrôleur de niveau de liquide (14).

5. Dispositif selon la revendication 1, où le rapport entre liquide et solide est réglable entre 35 l et 20.000 l de liquid par Kg de solide.

**Patentansprüche**

1. Apparat für die Zufuhr von Feststoffen in einer geregelten Weise in Flüssigkeiten, wobei ein rotierendes Ventil (2), das eine horizontale Welle (9) aufweist, den Feststoff direkt in Kontakt mit der umlaufenden Flüssigkeit einführt und die Flüssigkeit in einem höhen Flüssigkeit/Feststoff Verhältnis umgelauft wird und as Niveau der umlaufenden Flüssigkeit unter der Welle des Ventilen gehalten wird.

2. Apparat gemäß Anspruch 1, wobei die umlaufende Flüssigkeit in das zylindridrische Gehäuse (8) des rotierenden Ventils (2) durch Öffnung (11) eintritt und durch Öffnung (12) hinausgeht, und wobei sich die Öffnungen auf den seitlichen Verschluß-flanschen des zylindrischen Gehäuse, unter die horizontale Welle (9) finden.

3. Apparat gemäß Ansprüchen 1 und 2 wobei zwei oder mehrere Flügel (10) an der horizontalen Welle (9) zusammengeschweißt oder anders befestigt sind, und die Flügel kein Siegel gegen das zylindrische Gehäuse bilden, um den Ausgang der Flüssigkeit zu erleichtern und die Höhe der Flüssigkeit unter die Welle (9) konstant zu halten.

4. Apparat gemäß Anspruch 1, wobei das rotierende Ventil (2) mit einem Regler (14) der Flüssigkeithöhe versehen ist.

5. Apparat gemäß Anspruch 1, wobei das Flüssigkeitsdurchgang/Feststoff Verhältnis zwischen 35 und 20.000 l Flüssigkeit pro Kg Feststoff eingestellt werden kann.

# FIG 1